# DEMANDE DE BREVET EUROPEEN

(11) **EP 4 400 675 A1**
(43) Date de publication de la demande: **17.07.2024**
(21) Numéro de dépôt: 24151557.6
(22) Date de dépôt: 12.01.2024
(51) Int. Cl.: E04H 4/12, H04L 12/28, G05B 19/042, G05B 23/00, G05D 9/12, G05D 23/19

(54) **PROCEDE ET SYSTEME DE SURVEILLANCE DE L'EXPLOITATION D'UNE INFRASTRUCTURE AQUATIQUE**

(30) Priorité: 12.01.2023 FR 2300313
(71) Demandeur: Sunny Shark, 97419 La Possession (FR)
(72) Inventeur: QUILICHINI, Emmanuel, 67100 STRASBOURG (FR)
(74) Mandataire: Plasseraud IP

(57) **Abrégé**

Il est décrit un procédé de surveillance de l'exploitation d'une infrastructure aquatique (1) comprenant un bassin à débordement (10) et un bac de récupération (12) de l'eau ayant débordé du bassin à débordement, le procédé étant mis en oeuvre par un calculateur et comprenant :
- La réception de données relatives à l'évolution temporelle d'une quantité d'eau dans le bac de récupération et/ou d'une température de l'eau du bac de récupération, et
- L'analyse des données reçues pour détecter des évènements d'exploitation du bassin à débordement.

## Description

### Domaine technique

La présente divulgation concerne la surveillance de l'exploitation d'une infrastructure aquatique comprenant un bassin à débordement et un bac de récupération de l'eau ayant débordé du bassin à débordement. Elle s'applique notamment à la surveillance de l'exploitation des piscines collectives ou des centres aquatiques de loisirs.

### Technique antérieure

Les infrastructures aquatiques, telles que les piscines collectives ou les centres aquatiques de loisirs, sont des infrastructures fortement consommatrices en eau et en énergie. D'une part, une grande quantité d'eau est nécessaire non seulement pour remplir initialement le ou les bassins d'une infrastructure, mais également, tout au long de l'exploitation de l'infrastructure, pour compenser la diminution du niveau d'eau en fonction de l'évaporation, des éventuelles fuites, des éclaboussures et de l'eau qui est prélevée par les nageurs qui quittent le bassin.

D'autre part, la consommation d'énergie d'une telle infrastructure est élevée pour chauffer l'eau du ou des bassins, la filtrer, mais également pour assurer, dans le cas où un bassin est couvert, une ventilation nécessaire pour contrôler le taux d'humidité dans l'air, évacuer la trichloramine présente dans l'air du hall, issue des composés chlorés contenus dans l'eau, et un chauffage éventuel de l'air admis par la ventilation pour conserver une température de l'air acceptable pour les nageurs.

Afin de maîtriser au mieux la consommation d'eau et d'énergie d'une infrastructure aquatique, il est donc nécessaire d'en surveiller l'exploitation de façon fiable. Ainsi par exemple : plus l'agitation du bassin est élevée, ce qui revient à un nombre plus élevé d'usagers ou à une activité plus intense des usagers dans le bassin, et plus grand est le besoin de ventiler le hall, ce qui est une activité énergivore. Par conséquent, le fait de connaître avec précision l'agitation du bassin permet d'ajuster la ventilation du hall et d'éviter de ventiler plus que nécessaire lorsque le bassin est faiblement agité.

Selon un autre exemple la consommation d'eau de l'infrastructure doit pouvoir être surveillée pour pouvoir détecter d'éventuelles fuites ou pertes accidentelles.

On connaît par exemple du document US 4,686,718, une méthode de mesure automatique du niveau d'eau dans une piscine, reposant sur la mesure de la position d'un flotteur, ou du document FR3100552 un dispositif de mesure de la hauteur d'eau dans une piscine par un capteur LIDAR. Cependant la surveillance d'un bassin par la mesure du niveau d'eau du bassin n'est pas suffisante car cette mesure peut être fortement variable selon l'endroit où elle est réalisée, puisque l'activité d'un bassin peut être fortement hétérogène entre des zones faiblement occupées et des zones fortement occupées, ce qui impacte l'amplitude des variations de niveau au point de mesure.

On connait aussi du document US 2002/078735 un dispositif de détection de fuite dans une piscine. Un tel dispositif ne répond cependant pas aux besoins plus larges de surveillance de l'exploitation d'une infrastructure énoncés ci-avant.

### Résumé

La présente divulgation vient améliorer la situation.

A cet égard, il est proposé un procédé de surveillance de l'exploitation d'une infrastructure aquatique comprenant un bassin à débordement et un bac de récupération de l'eau ayant débordé du bassin à débordement, le procédé étant mis en oeuvre par un calculateur et comprenant :
- la réception de données relatives à l'évolution temporelle d'une quantité d'eau dans le bac de récupération et/ou d'une température de l'eau du bac de récupération, et
- l'analyse des données reçues pour détecter des évènements d'exploitation du bassin à débordement.

Dans des modes de réalisation, l'infrastructure aquatique comprend au moins un bâtiment dans lequel se trouve le bassin à débordement, et l'infrastructure aquatique comprend au moins un système pilotable parmi :
- Des systèmes de ventilation de l'air circulant dans le bâtiment,
- des systèmes de traitement et de chauffage de l'air circulant dans le bâtiment,
- des systèmes de traitement et de chauffage de l'eau du bassin à débordement,
- des systèmes d'éclairage du bâtiment, et/ou du bassin à débordement,
et le procédé comprend en outre, en fonction des évènements d'exploitation du bassin détectés, le pilotage d'un système pilotable.

Dans des modes de réalisation, la quantité d'eau dans le bac de récupération est un niveau d'eau ou un volume d'eau.

Dans des modes de réalisation, la réception de données relatives à l'évolution temporelle de la quantité d'eau dans le bac de récupération et de la température de l'eau du bac de récupération, et l'analyse est mise en oeuvre sur des données de température et des données de niveau d'eau reçues pour une même période temporelle.

Dans des modes de réalisation, l'analyse des données reçues pour détecter des évènements d'exploitation comprend une détermination d'un ensemble de paramètres de fonctionnement lorsque le bassin à débordement est inoccupé, et une détection d'évènements d'exploitation à partir des paramètres déterminés.

Dans des modes de réalisation, le procédé comprend la réception d'une série de mesures successives de quantité d'eau dans le bac de récupération, le calcul d'un indicateur de dispersion desdites mesures et la détermination d'un état inoccupé du bassin à débordement lorsque l'indicateur de dispersion est inférieur à un seuil prédéterminé.

Dans des modes de réalisation, le procédé comprend la détermination d'une quantité d'eau minimale dans le bac de récupération déclenchant un remplissage automatique du bac.

Dans des modes de réalisation, le procédé comprend la détection d'un remplissage du bassin à débordement lorsqu'un ensemble de conditions est satisfait, l'ensemble de conditions comprenant la détection d'une augmentation de la quantité d'eau dans le bac de récupération à partir d'une quantité d'eau inférieure ou égale à une quantité d'eau minimale prédéterminée.

Dans des modes de réalisation, l'ensemble de conditions pour la détection d'un remplissage du bassin à débordement comprend en outre la condition suivante : la température de l'eau du bac de récupération diminue lors de la période d'augmentation de la quantité d'eau dans le bac de récupération.

Dans des modes de réalisation, le procédé comprend la détermination d'un débit de remplissage du bac de récupération et la détermination d'une consommation d'eau à partir d'un nombre de remplissages détectés, du débit de remplissage et d'une durée de chaque remplissage.

Dans des modes de réalisation, le procédé comprend la détection d'un lavage de filtre lorsque :
- une augmentation simultanée de la température de l'eau et de la quantité d'eau dans le bac de récupération est détectée, et
- l'augmentation simultanée est suivie de la détection d'au moins un remplissage du bassin à débordement.

Dans des modes de réalisation, le procédé comprend la détermination d'une pente temporelle de la quantité d'eau dans le bac de récupération correspondant à un taux de perte nominal du bassin à débordement.

La détermination d'une pente temporelle correspondant au taux de perte nominal peut comprendre :
∘ la détection d'un remplissage du bassin à débordement, et
∘ le calcul du taux de variation défini par un ratio entre la variation de la quantité d'eau entre une première mesure de la quantité d'eau dans le bac de récupération à l'issue du remplissage et une deuxième mesure de la quantité d'eau dans le bac de récupération après l'écoulement d'un laps de temps T après le remplissage, et divisée par le laps de temps T.

Dans des modes de réalisation, le procédé comprend la détermination d'une quantité d'eau nominale dans le bac de récupération à un instant donné, à partir de la quantité d'eau dans le bac de récupération à l'issue d'un remplissage, du taux de perte nominal et d'un temps écoulé depuis le dernier remplissage détecté.

Le cas échéant, le procédé peut comprendre en outre une évaluation d'un niveau d'activité des occupants du bassin à débordement à partir d'une différence entre une quantité d'eau dans le bac de récupération mesurée à un instant donné et la quantité d'eau nominale au même instant.

Dans des modes de réalisation, le procédé comprend en outre la réception de données relatives à l'évolution temporelle du niveau d'eau dans le bassin à débordement, et l'analyse des données reçues comprend une évaluation d'une masse d'occupants dans le bassin à débordement à partir du niveau d'activité des occupants et d'une analyse de l'évolution temporelle du niveau d'eau dans le bassin à débordement.

Dans des modes de réalisation, le procédé comprend la détection d'une fuite lorsque la pente temporelle de la quantité d'eau dans le bac de récupération devient inférieure à la pente temporelle correspondant à un taux de perte nominal du bassin à débordement.

Dans des modes de réalisation, le procédé comprend la détection d'une défaillance dans le remplissage du bassin à débordement ou d'un encrassement d'un filtre lorsque la pente temporelle de la quantité d'eau dans le bac de récupération devient supérieure à la pente temporelle correspondant à un taux de perte nominal du bassin à débordement.

Selon un autre objet, il est également décrit un produit programme d'ordinateur, comprenant des instructions de code pour la mise en oeuvre du procédé selon la description qui précède, quand il est exécuté par un calculateur.

Selon un autre objet, il est également décrit un support d'enregistrement non transitoire lisible par un ordinateur, sur lequel est enregistré un programme pour la mise en oeuvre du procédé selon la description qui précède, lorsque ce programme est exécuté par un calculateur.

Selon un autre objet, il est également décrit un calculateur, configuré pour mettre en oeuvre le procédé selon la description qui précède.

Selon un autre objet, il est décrit un système de surveillance de l'exploitation d'une infrastructure aquatique comprenant un bassin à débordement et un bac de récupération de l'eau ayant débordé du bassin à débordement, le système de surveillance comprenant au moins l'un d'un capteur de niveau d'eau dans le bac de récupération et d'un capteur de température de l'eau du bac de récupération, et un calculateur en communication avec chaque capteur et configuré pour mettre en oeuvre le procédé selon la description qui précède.

Dans des modes de réalisation, le système de surveillance comprend un capteur de niveau d'eau dans le bac de récupération, le système de surveillance comprenant en outre un capteur de niveau d'eau dans le bassin à débordement, en communication avec le calculateur, le calculateur étant configuré pour recevoir des données relatives à l'évolution temporelle du niveau d'eau dans le bassin à débordement et dans le bac de récupération, et pour analyser les données reçues, l'analyse comprenant une évaluation d'une masse d'occupants dans le bassin à débordement à partir du niveau d'activité des occupants et d'une analyse de l'évolution temporelle du niveau d'eau dans le bassin à débordement.

Le procédé proposé permet d'exploiter des données relatives à l'évolution temporelle de la quantité de l'eau recueille dans un bac de récupération d'un bassin à débordement pour détecter des évènements concernant l'exploitation de ce bassin. En effet selon un usage normal et en l'absence d'occupation, une quantité d'eau déterminée déborde continuellement d'un bassin à débordement vers un bac de récupération, d'où elle est récupérée pour être filtrée et recirculée vers le bassin à débordement. Il est donc possible de détecter des fuites ou des remplissages, mais également de mesurer l'activité dans le bassin à débordement, par analyse de l'évolution de la quantité d'eau dans le bac tampon.

### Brève description des dessins

D'autres caractéristiques, détails et avantages apparaîtront à la lecture de la description détaillée ci-après, et à l'analyse des dessins annexés, sur lesquels :
**Fig. 1**

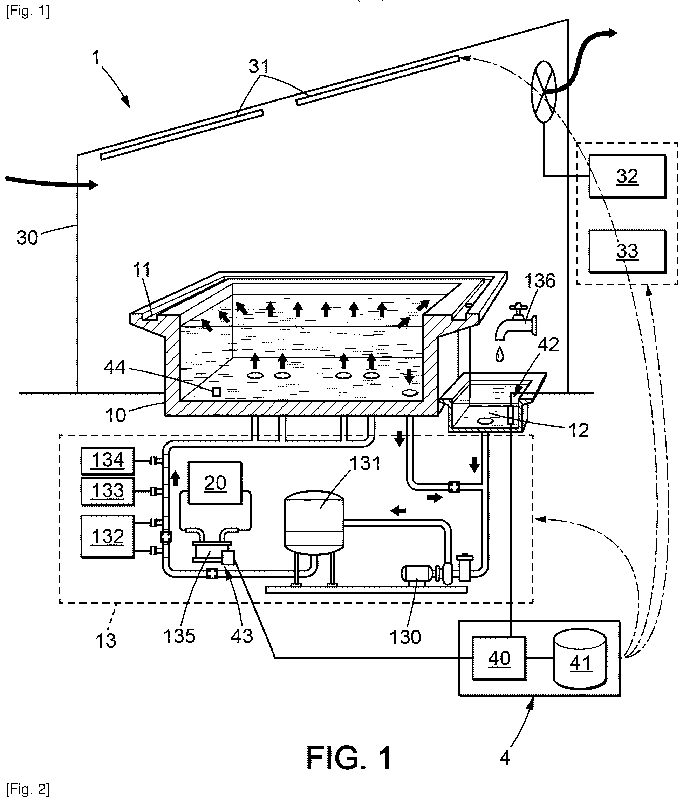

   [Fig. 1] représente schématiquement un exemple d'infrastructure aquatique comprenant un bassin à débordement et un bac de récupération.
**Fig. 2**

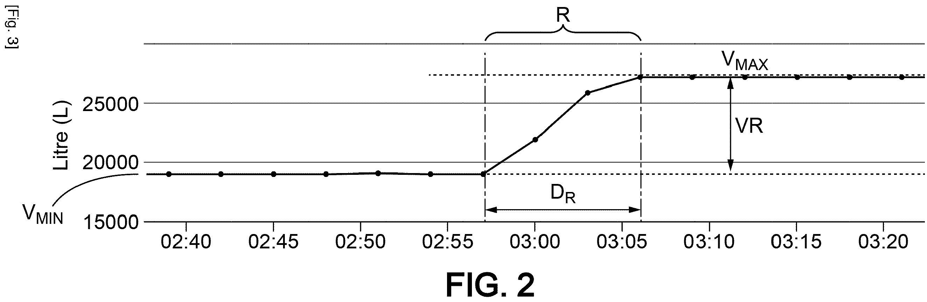

   [Fig. 2] représente un exemple de détection d'un remplissage du bassin à débordement à partir de l'évolution temporelle d'une quantité d'eau dans le bac de récupération.
**Fig. 3**

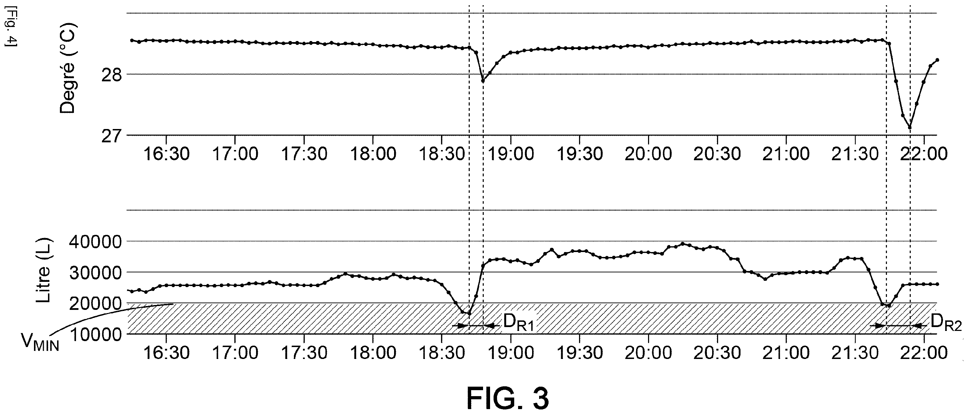

   [Fig. 3] représente un exemple de détection d'un remplissage du bassin à débordement à partir de l'évolution temporelle d'une quantité d'eau dans le bac de récupération et de la température de l'eau du bac de récupération.
**Fig. 4**

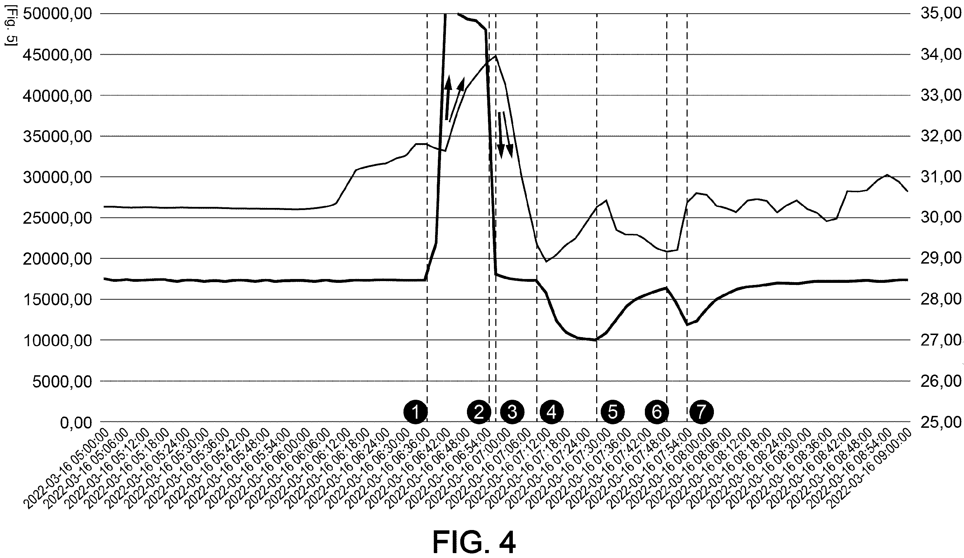

   [Fig. 4] représente un exemple de détection d'un lavage de filtre à partir de l'évolution temporelle d'une quantité d'eau dans le bac de récupération et de la température de l'eau du bac de récupération.
**Fig. 5**

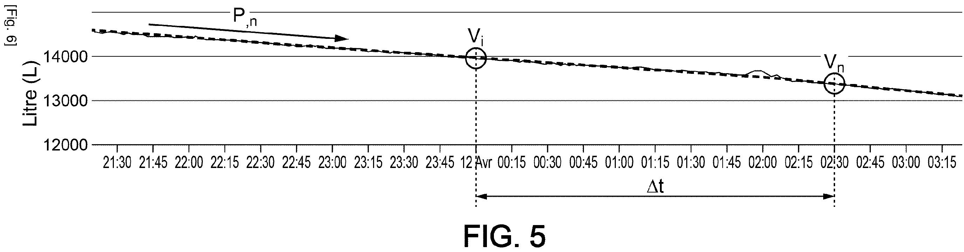

   [Fig. 5] représente un exemple d'évolution de la quantité d'eau dans le bac de récupération en l'absence d'activité, de fuite ou de dysfonctionnement de l'infrastructure aquatique.
**Fig. 6**

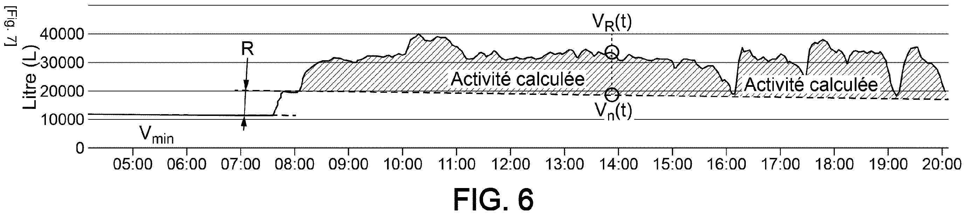

   [Fig. 6] représente un exemple d'évolution de la quantité d'eau dans le bac de récupération en présence d'occupants dans le bassin à débordement.
**Fig. 7**

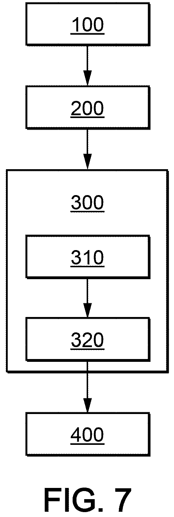

   [Fig. 7] représente schématiquement les principales étapes d'un procédé de surveillance de l'exploitation d'une infrastructure aquatique selon un mode de réalisation.

### Description des modes de réalisation

En référence à la figure 1, on a représenté schématiquement une infrastructure aquatique 1, pouvant typiquement être une piscine municipale, un centre aquatique de loisirs ou de détente. L'infrastructure aquatique comprend au moins un bassin à débordement 10. Le bassin à débordement est dimensionné pour pouvoir accueillir des occupants pour la pratique d'activités aquatiques diverses telles que la natation, l'apprentissage de la natation, la plongée, la pratique d'un sport aquatique ou la détente. Le bassin à débordement est configuré pour déborder en continu dans une goulotte périphérique 11, l'eau ayant débordé du bassin étant récupérée dans un bac de récupération 12, également appelé bassin tampon on bac tampon. Une variation de volume d'eau ou d'activité dans le bassin à débordement se traduit par une variation du niveau d'eau dans le bac de récupération, puisqu'une augmentation du volume d'eau dans le bassin à débordement, ou de la quantité d'occupants dans ce bassin, provoque un déplacement d'un volume d'eau vers le bac de récupération et donc une augmentation du niveau d'eau dans le bac de récupération.

L'infrastructure aquatique comprend un circuit de traitement 13 et de recyclage de l'eau ayant débordé du bassin 10, qui comprend typiquement une pompe 130 de circulation, adaptée pour pomper l'eau du bac de récupération et la faire recirculer dans le circuit de traitement, un filtre 131, et des postes de traitement de l'eau, tels que par exemple un poste de désinfection par UV 132, un poste de chloration 133 et un poste de neutralisation du pH de l'eau 134. Le circuit de traitement 13 comprend également une arrivée d'eau d'appoint 136 permettant de remplir le circuit quand le niveau d'eau dans le bac de récupération baisse Le remplissage du circuit est réalisé par un déversement gravitaire de l'eau neuve dans le bac de récupération 12, pour empêcher tout reflux d'eau dans le réseau de distribution d'eau. L'infrastructure aquatique 1 comprend également un système de chauffage de l'eau 20, comprenant par exemple un dispositif de production d'eau chaude 21 et un échangeur thermique 135 permettant de chauffer l'eau circulant dans le circuit de traitement 13 et de recyclage. L'eau ainsi filtrée, chauffée et traitée est réinjectée dans le bassin à débordement.

Les éléments composants le circuit de traitement 13 et de recyclage de l'eau sont avantageusement pilotables pour pouvoir traiter une quantité d'eau recyclée variable ou s'adapter à des conditions de fonctionnement (par exemple température ambiante à l'extérieure de l'infrastructure) variables.

Dans des modes de réalisation, le bassin à débordement est couvert. L'infrastructure aquatique comprend alors au moins un bâtiment 30 dans lequel se trouve le bassin à débordement. Le bâtiment 30 comprend alors des systèmes d'éclairage 31 du bâtiment et, le cas échéant, du bassin à débordement, ainsi que des systèmes de ventilation 32, et de traitement et de chauffage de l'air 33 circulant dans le bâtiment. Ces systèmes sont également pilotables en fonction de l'affluence dans le bassin à débordement, pour pouvoir contrôler notamment le taux d'humidité de l'air, la température de l'air ainsi que la concentration de trichloramine, chloroforme et autres composés potentiellement incommodants, irritants ou toxiques contenus dans l'air.

L'infrastructure aquatique comprend également au moins un système 4 de surveillance de l'exploitation de l'infrastructure, comprenant au moins un calculateur 40, et une mémoire 41. Le calculateur peut comprendre un ou plusieurs processeurs, microprocesseurs, contrôleurs, microcontrôleurs, FPA, etc. La mémoire 41 peut être une mémoire non volatile stockant des instructions de code exécutées par le calculateur 40. La mémoire 41 peut également stocker un ensemble de paramètres de fonctionnements relatifs à l'infrastructure aquatique. Le calculateur et la mémoire peuvent être colocalisés, c'est-à-dire être se trouver physiquement dans l'infrastructure aquatique, ou être délocalisés, par exemple dans un serveur distant. Le système 4 de surveillance de l'exploitation de l'infrastructure comprend également au moins l'un d'un capteur 42 de niveau d'eau dans le bac de récupération 12, et d'un capteur 43 de température de l'eau du bac de récupération. Avantageusement, le système 4 de surveillance comprend un capteur 42 de niveau d'eau dans le bac de récupération 12 et un capteur 43 de température de l'eau du bac de récupération. Le capteur de niveau d'eau peut par exemple être un ou plusieurs capteur(s) de pression disposé au fond du bac de récupération. Alternativement, et de façon non limitative, le capteur de niveau d'eau peut également être un capteur à ultrasons ou un capteur laser.

Le capteur de niveau d'eau 42 dans le bac de récupération 12 est adapté pour mesurer en continu ou à une fréquence temporelle déterminée un niveau d'eau dans le bac de récupération, qui peut être converti en un volume d'eau contenu dans le bac de récupération, si la géométrie de ce bac est connue. C'est le cas des exemples de courbes représentées dans les figures 2 à 6, où l'axe des abscisses représente le temps et l'axe des ordonnées représente un volume d'eau dans le bac de récupération. Dans la suite, on désignera la grandeur obtenue à partir des mesures du capteur de niveau d'eau par « quantité d'eau », cette grandeur désignant soit un niveau d'eau, soit un volume d'eau dans le bac de récupération 12. Quand le système de surveillance 4 comprend un capteur de niveau d'eau 42 dans le bac de récupération, le calculateur 40 est en communication avec celui-ci pour recevoir les mesures de quantité d'eau réalisées.

Le capteur de température de l'eau 43 du bac de récupération est adapté pour mesurer la température de l'eau contenue dans le bac de récupération ou dans le circuit, entre le bac de récupération et en amont de l'échangeur thermique 135, ce dernier cas étant représenté sur la figure 1. Le capteur de température 43 est adapté pour réaliser des mesures en continu ou à une fréquence déterminée. Quand le système de surveillance 4 comprend un capteur de température, le calculateur 40 est en communication avec celui-ci pour recevoir les mesures de température réalisées.

Dans des modes de réalisation, le système 4 de surveillance de l'exploitation de l'infrastructure comprend en outre un ou plusieurs capteurs de niveau d'eau dans le bassin à débordement 10. Comme pour le capteur 42, ce capteur de niveau d'eau peut être un capteur de pression disposé au fond du bassin à débordement, ou encore un capteur à ultrasons ou un capteur laser. Également, les données obtenues par ce capteur peuvent être traduites en un volume d'eau, connaissant le volume du bassin à débordement.

Comme décrit plus en détails ci-après, le calculateur 40 est configuré pour analyser les données relatives à l'évolution temporelle de la quantité d'eau dans le bac de récupération et/ou de la température de l'eau du bac de récupération, pour détecter des évènements d'exploitation du bassin à débordement, comprenant par exemple être des dysfonctionnements, fuites, ou des pannes de matériel.

Dans des modes de réalisation, le calculateur 40 est également configuré pour piloter les systèmes pilotables 13, 31, 32, 33 décrits ci-avant afin d'adapter leur fonctionnement aux évènements détectés. Ainsi, il est possible de piloter plus finement les systèmes de gestion d'une infrastructure aquatique, et notamment des systèmes fortement énergivores tels que le chauffage et la ventilation, en fonction de l'activité réelle de l'infrastructure, et en particulier de l'activité des occupants du bassin.

En référence aux figures 2 à 6, on va maintenant décrire un procédé de surveillance de l'exploitation de l'infrastructure mis en oeuvre par le système de surveillance 4. Les principales étapes du procédé sont représentées schématiquement sur la figure 7.

Ce procédé comprend une étape 100 d'acquisition, respectivement par le capteur de niveau d'eau 42 ou par le capteur de température 43, de données relatives à l'évolution temporelle d'une quantité d'eau dans le bac de récupération ou d'une température de l'eau du bac de récupération. Dans des modes de réalisation, l'étape 100 comprend également l'acquisition, par le capteur de niveau d'eau 44 dans le bassin à débordement, de données relatives à l'évolution temporelle d'une quantité d'eau dans le bassin à débordement.

Dans des modes de réalisation, cette acquisition est réalisée à une fréquence déterminée de façon permanente, pour pouvoir surveiller en permanence l'infrastructure aquatique et détecter des évènements éventuels. La fréquence d'acquisition des données de quantité d'eau ou de température est de préférence d'au moins une fois par minute, de préférence de plus d'une fois par minute, par exemple entre 1 et 10 fois par minute. Le procédé comprend la réception 200, par le calculateur 40, des données acquises par le ou les capteurs 42, 43, et le cas échéant 44. Dans un mode de réalisation, les données sont transmises par les capteurs au calculateur 40 au fur et à mesure de leur acquisition. Ceci permet une détection plus rapide des éventuels dysfonctionnements et donc une résolution plus rapide. En variante, les données peuvent être transmises au calculateur 40 à une fréquence inférieure à leur fréquence d'acquisition, par exemple de l'ordre d'une à plusieurs fois par heure.

Le procédé comprend ensuite l'analyse 300 par le calculateur 40 des données reçues du ou des capteurs pour superviser l'exploitation du bassin, et notamment pour détecter des évènements d'exploitation du bassin à débordement. Les évènements d'exploitation peuvent comprendre par exemple, et de façon non limitative :
- L'évaluation d'un niveau d'activité des occupants du bassin,
- La détection d'un remplissage du bassin,
- La détection d'un lavage de filtre,
- La détection d'une fuite, pouvant par exemple être causée par une fissure, un tuyau qui fuit, une vanne mal fermée ou qui n'est plus étanche,
- La détection d'un dysfonctionnement dans une vanne d'alimentation du bassin à débordement.

Le terme « niveau d'activité » désigne dans la présente les perturbations de la quantité d'eau débordant du bassin qui sont causées par la présence des occupants du bassin. Le niveau d'activité dépend d'une part de l'affluence, puisque plus le nombre de personnes présentes dans le bassin est élevé, et plus la quantité d'eau déplacée par la présence de ces personnes est importante, mais il dépend aussi du type d'activité pratiquée par les occupants, certaines activités, notamment sportives ou de loisirs (par exemple : water-polo, jeux d'enfants) pouvant causer des perturbations plus conséquentes que d'autres (par exemple : nage calme). Le niveau d'activité est une grandeur plus pertinente à connaître que le simple comptage des occupants du bassin, puisqu'il impacte directement l'émission de trichloramine dans l'air, le taux d'humidité dans l'air etc.

L'analyse des données par le calculateur peut également permettre de quantifier, le cas échéant, la consommation d'eau pour le remplissage du bassin, ou les fuites d'eau.

L'analyse 300 pour superviser l'exploitation du bassin 10 peut ensuite permettre, à partir des évènements détectés ou des grandeurs mesurées, d'intervenir 400 directement au niveau des systèmes pilotables 13, 31, 32, 33, c'est-à-dire de commander l'un de ces systèmes, par exemple pour régler un débit d'air circulant dans le bâtiment ou le chauffage du bâtiment, un débit de filtration de l'eau, etc.. Elle permet également d'intervenir sur des composants de l'infrastructure identifiés comme défaillants (réparation ou remplacement de vanne, colmatage de fissure, etc.)

Dans des modes de réalisation, l'analyse 300 peut comprendre la détermination 310 d'un ensemble de paramètres lorsque le bassin à débordement est inoccupé, puis la détection d'évènements d'exploitation du bassin 320, certains évènements étant détectés à partir des paramètres déterminés. Les étapes de détermination 310 et de détection 320 peuvent être répétées à une fréquence donnée, de façon à maintenir des paramètres à jour pour la surveillance de l'exploitation du bassin, et/ou pour surveiller une évolution temporelle des paramètres qui sont déterminés à l'étape 310. Par exemple, le procédé peut comprendre une détermination 310 des paramètres à chaque période d'inoccupation, par exemple la nuit, et la détection d'évènements d'exploitation du bassin 320 en période d'occupation.

Dans des modes de réalisation, l'état inoccupé du bassin peut être déduit des heures de fermeture au public de l'infrastructure aquatique. En variante, il peut être déterminé lorsqu'un indicateur de dispersion, par exemple un écart-type, d'une série de mesures consécutives de la quantité d'eau dans le bac de récupération, est inférieur à un seuil déterminé.

En référence à la figure 2, qui représente un exemple d'évolution temporelle de la quantité d'eau (en l'occurrence un volume) dans le bac de récupération, cette quantité d'eau est, en dehors des périodes d'activité du bassin, et en dehors de toute fuite ou dysfonctionnement des équipements, sensiblement constante ou en légère baisse en fonction du temps, cette baisse pouvant être liée à une évaporation progressive de l'eau contenue dans le bassin de débordement 10. Cette baisse reflète également une baisse du volume d'eau dans le bassin à débordement 10. Pour compenser cette baisse, des remplissages automatiques, ont lieu lorsque le volume d'eau dans le bassin à débordement atteint un volume minimal.

Par conséquent, les paramètres pouvant être déterminés 310 lorsque le bassin est inoccupé peuvent comprendre l'un ou une pluralité des paramètres suivants :
- quantité d'eau Vₘᵢₙ dans le bac de récupération, correspondant à un niveau d'eau minimal dans le bassin à débordement, démarrant automatiquement le remplissage du bac de récupération,
- quantité d'eau Vₘₐₓ dans le bac de récupération, correspondant à un niveau d'eau atteint dans le bassin à débordement arrêtant automatiquement le remplissage du bac de récupération,
- Débit de remplissage automatique,
- Taux de perte du bassin, somme de l'évaporation et des éventuelles fuites.

La quantité d'eau Vₘᵢₙ correspondant au volume minimal déclenchant un remplissage automatique peut être paramétrée comme étant la quantité d'eau dans le bac de récupération lorsqu'un remplissage a lieu lors d'une période d'inactivité du bassin. Ce remplissage peut être programmé, donc connu a priori, ou détecté automatiquement comme une augmentation brusque de la quantité d'eau dans le bac de récupération.

La quantité d'eau Vₘₐₓ dans le bac de récupération 12 correspondant au niveau haut du bassin à débordement après le remplissage peut également être déterminée comme étant la quantité d'eau atteinte dans le bac 12 à l'issue d'un remplissage en période d'inoccupation du bassin.

L'étape 310 peut également comprendre la détermination de la durée du remplissage D_{R} et d'un volume du remplissage VR. En référence à la figure 2, la durée de remplissage peut être déterminée uniquement à partir de l'évolution temporelle de la quantité d'eau dans le bassin, comme étant la période de temps écoulée entre le début de l'augmentation de la quantité d'eau dans le bac de récupération à partir de la quantité Vₘᵢₙ et l'atteinte du niveau « haut » correspondant à la quantité Vₘₐₓ.

Le volume de remplissage peut quant à lui être déterminé à partir de l'évolution temporelle de la quantité d'eau dans le bac de récupération 12, par la mesure de la différence entre la quantité d'eau mesurée à la fin du remplissage et au début du remplissage. Cette différence peut être déterminée directement en volume, ou sinon en niveau d'eau, et peut être traduite en volume par la connaissance de la géométrie du bac de récupération.

De la durée de remplissage et du volume de remplissage peut ensuite être déduit un débit de remplissage. La détermination du débit de remplissage est avantageuse pour permettre ensuite de déterminer le volume d'eau consommé lors des remplissages subséquents. Comme indiqué précédemment, l'étape 310 peut être répétée ultérieurement pour mettre à jour certains paramètres, et en particulier le débit de remplissage, dont la valeur peut varier en fonction de la pression du réseau de distribution d'eau.

En référence à la figure 5, la détermination 310 des paramètres lors d'une période d'inactivité ou d'inoccupation du bassin peut comprendre la détermination de la pente temporelle Pn de la quantité d'eau dans le bac de récupération correspondant à un taux de perte nominal du bassin à débordement. Comme indiqué précédemment, ce taux de perte nominal correspond à l'évaporation de l'eau du bassin à débordement. Cette pente est calculable par la différence de quantité d'eau mesurée sur une période de temps déterminée, en dehors d'une période de remplissage du bassin à débordement 10, et pendant une période d'inactivité de ce bassin.

Cette pente, que l'on qualifie de nominale, est supposée sensiblement constante, et négative, de sorte que la surveillance de l'évolution temporelle de cette pente peut permettre de détecter des dysfonctionnements de l'infrastructure.

Par exemple, une pente inférieure à la pente nominale, c'est-à-dire une diminution de quantité d'eau supérieure, en valeur absolue, à celle observée pour la pente nominale, moyennant une tolérance déterminée, est indicative d'une fuite dans l'infrastructure, par exemple au niveau d'un tuyau, d'une vanne, d'une fissure, etc.

A l'inverse, une pente supérieure à la pente nominale, c'est-à-dire une diminution de quantité d'eau plus réduite que celle observée pour la pente nominale, voire une augmentation progressive de la quantité d'eau dans le bac de récupération 12, est indicative d'une défaillance dans le remplissage du bassin à débordement, par exemple au niveau d'une vanne d'alimentation qui ne ferme plus ou d'un encrassement progressif des filtres.

Une fois les paramètres décrits ci-avant déterminés, le calculateur 40 peut être configuré pour détecter 320 des évènements d'exploitation du bassin.

Dans des modes de réalisation, le calculateur 40 peut être configuré pour détecter des remplissages du bassin, y compris dans des périodes d'activité.

Dans un mode de réalisation, un remplissage est détecté quand un ensemble de conditions est respecté, comprenant au moins le fait qu'une augmentation brusque de la quantité d'eau dans le bac de récupération a lieu, à partir d'une quantité d'eau inférieure ou égale à la quantité Vₘᵢₙ correspondant au volume minimal dans le bassin à débordement - cette comparaison pouvant être réalisée moyennant une tolérance déterminée.

Dans des modes de réalisation, l'ensemble de conditions comprend également une condition sur la pente de l'augmentation de la quantité d'eau dans le bac de récupération 12, qui doit être supérieure ou égale à un seuil déterminé. L'ensemble de conditions peut également comprendre une condition sur une valeur maximale que la quantité d'eau dans le bac de récupération 12 ne doit pas dépasser, moyennant une tolérance déterminée, cette valeur maximale correspondant au niveau haut Vₘₐₓ paramétré après remplissage du bac de récupération.

Sur la figure 3, on a représenté un autre exemple d'évolution temporelle de la quantité d'eau dans le bac de récupération 12, et l'évolution temporelle simultanée de la température de l'eau du bac de récupération. En référence à la figure 3, l'ensemble de conditions pour la détection d'un remplissage peut également comprendre une condition sur la température de l'eau du bac de récupération, qui doit diminuer pendant la période de remplissage, i.e. pendant la période à laquelle la quantité d'eau dans le bac de récupération augmente. En effet, l'eau neuve étant injecté dans le circuit au niveau du bac de récupération, un remplissage peut être détecté par l'impact élevé du volume d'eau neuve injecté sur la température de l'eau dans le bac de récupération ou en aval de celui-ci. Cette condition sur une chute de température permet une détection plus fiable d'un remplissage, car une augmentation brusque de la quantité d'eau dans le bassin peut aussi être liée à un afflux massif et rapide d'occupants dans le bassin.

Avantageusement, l'ensemble des conditions sur la détection d'un remplissage comprend au moins deux conditions parmi les trois suivantes :
- Condition sur l'augmentation de la quantité d'eau dans le bac de récupération à partir d'une quantité correspondant au volume minimal dans le bac de récupération
- Condition sur l'augmentation de la quantité d'eau dans le bac de récupération à une pente supérieure à un seuil déterminé,
- Condition sur la baisse de température de l'eau du bac de récupération.

La détection d'un remplissage peut également comprendre la détermination d'une durée du remplissage D_{R} et d'un volume du remplissage VR. En référence à la figure 2, la durée de remplissage peut être déterminée uniquement à partir de l'évolution temporelle de la quantité d'eau dans le bassin, comme étant la période de temps écoulée entre le début de l'augmentation de la quantité d'eau dans le bac de récupération et l'atteinte du niveau « haut » qui vient mécaniquement arrêter ce remplissage. En référence à la figure 3, la durée de remplissage peut alternativement, ou en complément, être déterminée à partir de l'évolution temporelle de la température de l'eau du bac de récupération, comme étant la période écoulée entre le début et la fin de la diminution de température de l'eau. Sur cette figure, on identifie deux remplissages de durées respectives D_{R1}, D_{R2}.

Le volume de remplissage peut ensuite être déterminé à partir de la durée de remplissage et du débit de remplissage qui a été déterminé à l'étape 310 lors d'une période d'inoccupation du bassin. Le volume cumulé des remplissages est avantageusement calculé pour surveiller la consommation d'eau de la structure et détecter d'éventuelles fuites.

Dans des modes de réalisation, l'analyse 300 des données reçues peut également comprendre la détection 320 d'un lavage de filtre. En référence à la figure 4, on a représenté un exemple d'évolution temporelle de la quantité d'eau dans le bac de récupération (axe de gauche) et de température (axe de droite) pendant un lavage de filtre. Un lavage de filtre se compose de plusieurs phases dont les effets sont détectables sur les courbes de température et de quantité d'eau dans le bac de récupération. Un lavage de filtre comprend une étape d'arrêt de la ou des pompes 130 - point 1 sur la figure 4 - qui se traduit par une augmentation de la quantité d'eau dans le bac, cette augmentation pouvant atteindre une quantité d'eau dans le bac de récupération supérieure à celle atteinte à l'issue d'un remplissage. En effet, l'arrêt de la filtration provoque un nouvel état d'équilibre du bassin à débordement où il ne déborde plus après un temps donné car toute l'eau située au-dessus du niveau des goulottes 11 s'est écoulée dans le bac de récupération 12. L'arrêt de la pompe 130 peut également être détectée sur la courbe de température dans le cas où le capteur de température est positionné au voisinage de l'échangeur de chaleur, car l'eau immobilisée peut se réchauffer significativement en fonction du positionnement du capteur et de la circulation d'eau chaude au primaire de l'échangeur. Le filtre est lavé lorsque la pompe est arrêtée, puis la pompe est remise en service, ce qui fait apparaître à la fois une baisse de la quantité d'eau dans le bac de récupération, afin de transférer l'eau à nouveau vers le bassin à débordement, et une baisse de la température (points 2 : fin du rinçage et 3 : remise en route de la pompe sur la figure 4). Le lavage est suivi d'un ou plusieurs remplissages automatiques qui peuvent être détectés par les conditions présentées ci-avant, car l'eau évacuée doit être remplacée et transite par le bac de récupération.

Cette succession d'étapes est détectable par la surveillance au moins de l'évolution temporelle du niveau d'eau dans le bac de récupération, de préférence combinée avec la surveillance de l'évolution temporelle de la température de l'eau dans le bac de récupération ou en aval de celui-ci. Le profil de niveau d'eau et de température lors d'un lavage de filtre peut néanmoins varier fortement d'une infrastructure à l'autre, en fonction du volume du bac de récupération, du volume d'eau nécessaire pour laver le filtre, etc.

Dans des modes de réalisation, la détection d'un lavage de filtre peut donc être réalisée par application d'un modèle d'apprentissage automatique préalablement entrainé, par exemple par apprentissage supervisé sur des séquences temporelles de température d'eau et de niveau d'eau dans le bac de récupération correspondant à des lavages de filtre ou correspondant à d'autres types d'évènement.

En variante, le calculateur 40 peut détecter un lavage de filtre par :
- La détection d'une augmentation de la quantité d'eau dans le bac de récupération, atteignant une quantité d'eau supérieure à la quantité maximale Vₘₐₓ atteinte lors d'un remplissage,
- éventuellement combinée à une diminution de la température de l'eau, et/ou
- éventuellement suivie par la détection d'au moins un remplissage.

Dans un mode de réalisation, les trois conditions énoncées ci-dessus sont cumulatives pour détecter un lavage de filtre.

De retour à la figure 5, lorsque la pente nominale Pₙ de la quantité d'eau dans le bac de récupération a été déterminée à l'étape 310, on peut en déduire lors de l'étape 320 une quantité d'eau nominale Vₙ dans le bac de récupération à un instant donné, à partir d'une quantité initiale Vᵢ connue et du temps écoulé Δt entre l'instant considéré et cette quantité initiale. Vₙ(t) = Vᵢ - Pₙ* Δt. En particulier, la quantité initiale connue peut être la quantité d'eau atteinte dans le bac de récupération à l'issue d'un remplissage.

Lorsque la quantité d'eau mesurée dans le bac de récupération est inférieure à la quantité nominale calculée pour le même instant, cela peut signifier un taux de perte accru ou que le volume de remplissage a été surestimé. En particulier, si la dernière détection de remplissage prise en compte était située en période d'occupation du bassin, elle a pu être confondue avec des fluctuations brutales d'activité. Dans ce cas le procédé peut comprendre une correction a posteriori du remplissage détecté à tort, avec la réduction ou la suppression du volume d'eau consommé correspondant.

La quantité d'eau nominale Vₙ mentionnée ci-avant est donc une quantité d'eau théorique, en l'absence de toute activité dans le bassin et de tout dysfonctionnement impactant la pente nominale. Cette quantité d'eau nominale étant connue, on peut ensuite évaluer un niveau d'activité dans le bassin à débordement par la différence entre la quantité d'eau mesurée V_{R}(t) dans le bac de récupération et cette quantité nominale. Sur la figure 6, on a représenté en pointillés la quantité d'eau nominale en fonction du temps, et l'écart mesuré entre la quantité réelle et cette droite correspond à l'activité du bassin.

Dans des modes de réalisation, ce niveau d'activité peut être affiné lorsque le bassin à débordement comprend lui aussi un capteur de niveau. En effet, la quantité d'eau contenue dans le bac de récupération correspond à un cumul d'un débordement d'eau de nature statique et de nature dynamique du bassin à débordement 10. Le caractère statique correspond à l'augmentation du niveau d'eau qui résulte du déplacement du volume d'eau correspondant au poids des nageurs en immersion statique dans le bassin, d'après la loi d'Archimède. Le caractère dynamique correspond au volume d'eau supplémentaire mis en mouvement par les nageurs par leur activité dans le bassin, et qui peut être significativement plus élevé que le volume d'eau déplacé de façon statique. Un capteur de niveau d'eau dans le bassin à débordement permet de déterminer uniquement la composante dynamique du débordement puisque le débordement ramène toujours la composante statique à un niveau d'eau constant dans le bassin. Par conséquent, dans le cas où l'infrastructure comprend un capteur de niveau d'eau dans le bassin à débordement et un capteur de niveau d'eau dans le bac de récupération, le procédé peut comprendre :
- La mesure d'un écart entre la quantité d'eau mesurée dans le bac de récupération et la quantité d'eau nominale correspondant à une absence d'activité, cet écart étant représentatif de la somme des composantes statique et dynamique de l'activité, et
- L'application de la même méthode pour mesurer un écart dynamique entre le niveau d'eau dans le bassin à débordement et un niveau d'eau nominal, pour obtenir la composante statique.

La différence entre l'activité totale et la composante dynamique (obtenue moyennant des conversions tenant compte des volumes respectifs de chaque bassin) permet d'accéder à l'activité statique qui peut être ramenée à une variation de volume d'eau et donc à une masse globale de l'ensemble des occupants du bassin. Optionnellement il est possible d'en déduire, , en considérant un gabarit moyen de nageurs, une estimation du nombre de nageurs dans le bassin.

## Revendications

1. Procédé de surveillance de l'exploitation d'une infrastructure aquatique (1) comprenant un bassin à débordement (10) et un bac de récupération (12) de l'eau ayant débordé du bassin à débordement, le procédé étant mis en oeuvre par un calculateur et comprenant :
- La réception (200) de données relatives à l'évolution temporelle d'une quantité d'eau dans le bac de récupération et/ou d'une température de l'eau du bac de récupération, et
- L'analyse (300) des données reçues pour détecter des évènements d'exploitation du bassin à débordement.

2. Procédé de surveillance selon la revendication 1, dans lequel l'infrastructure aquatique (1) comprend au moins un bâtiment (30) dans lequel se trouve le bassin à débordement (12), et l'infrastructure aquatique (1) comprend au moins un système pilotable parmi :
- Des systèmes de ventilation de l'air circulant dans le bâtiment (32)
- des systèmes de traitement et de chauffage de l'air (33) circulant dans le bâtiment,
- des systèmes de traitement et de chauffage de l'eau (13) du bassin à débordement,
- des systèmes d'éclairage (31) du bâtiment, et/ou du bassin à débordement,
et le procédé comprend en outre, en fonction des évènements d'exploitation du bassin détectés, le pilotage (400) d'un système pilotable.

3. Procédé de surveillance selon l'une des revendications précédentes, comprenant la réception de données relatives à l'évolution temporelle de la quantité d'eau dans le bac de récupération et de la température de l'eau du bac de récupération, et l'analyse est mise en oeuvre sur des données de température et des données de niveau d'eau reçues pour une même période temporelle.

4. Procédé de surveillance selon l'une des revendications précédentes, dans lequel l'analyse (300) des données reçues pour détecter des évènements d'exploitation comprend une détermination (310) d'un ensemble de paramètres de fonctionnement lorsque le bassin à débordement est inoccupé, et une détection d'évènements d'exploitation (320) à partir des paramètres déterminés.

5. Procédé selon l'une des revendications précédentes, comprenant la réception d'une série de mesures successives de quantité d'eau dans le bac de récupération, le calcul d'un indicateur de dispersion desdites mesures et la détermination d'un état inoccupé du bassin à débordement lorsque l'indicateur de dispersion est inférieur à un seuil prédéterminé.

6. Procédé de surveillance selon l'une des revendications 4 ou 5, comprenant la détermination d'une pente temporelle (Pₙ) de la quantité d'eau dans le bac de récupération correspondant à un taux de perte nominal du bassin à débordement.

7. Procédé de surveillance selon la revendication précédente, comprenant la détermination (320) d'une quantité d'eau nominale (Vₙ(t)) dans le bac de récupération à un instant donné, à partir de la quantité d'eau dans le bac de récupération à l'issue d'un remplissage, du taux de perte nominal (Vₙ) et d'un temps écoulé depuis le dernier remplissage détecté.

8. Procédé de surveillance selon la revendication précédente, comprenant en outre une évaluation d'un niveau d'activité des occupants du bassin à débordement à partir d'une différence entre une quantité d'eau (V_{R}(t)) dans le bac de récupération mesurée à un instant donné et la quantité d'eau nominale (Vₙ(t)) au même instant.

9. Procédé de surveillance selon la revendication précédente, comprenant en outre la réception de données relatives à l'évolution temporelle du niveau d'eau dans le bassin à débordement, et l'analyse (300) des données reçues comprend une évaluation d'une masse d'occupants dans le bassin à débordement à partir du niveau d'activité des occupants et d'une analyse de l'évolution temporelle du niveau d'eau dans le bassin à débordement.

10. Procédé de surveillance selon la revendication 6 à 9, comprenant la détection d'une fuite lorsque la pente temporelle de la quantité d'eau dans le bac de récupération devient inférieure à la pente temporelle correspondant à un taux de perte nominal (Pₙ) du bassin à débordement.

11. Procédé de surveillance selon l'une des revendications 6 à 10, comprenant la détection d'une défaillance dans le remplissage du bassin à débordement ou d'un encrassement d'un filtre lorsque la pente temporelle de la quantité d'eau dans le bac de récupération devient supérieure à la pente temporelle correspondant à un taux de perte nominal (Pₙ) du bassin à débordement.

12. Produit programme d'ordinateur, comprenant des instructions de code pour la mise en oeuvre du procédé selon l'une des revendications qui précèdent, quand il est exécuté par un calculateur (40).

13. Calculateur (40), configuré pour mettre en oeuvre le procédé selon l'une des revendications 1 à 11.

14. Système (4) de surveillance de l'exploitation d'une infrastructure aquatique (1) comprenant un bassin à débordement (10) et un bac de récupération (12) de l'eau ayant débordé du bassin à débordement, le système de surveillance comprenant au moins l'un d'un capteur de niveau d'eau (42) dans le bac de récupération (12) et d'un capteur de température (43) de l'eau du bac de récupération, et un calculateur (40) en communication avec chaque capteur et configuré pour mettre en oeuvre le procédé selon l'une des revendications 1 à 11.

15. Système de surveillance selon la revendication précédente, comprenant un capteur de niveau d'eau (42) dans le bac de récupération (12), et comprenant en outre un capteur de niveau d'eau (44) dans le bassin à débordement, en communication avec le calculateur (40), le calculateur étant configuré pour mettre en oeuvre le procédé selon la revendication 9.
